# FASCICULE DE BREVET EUROPEEN

(11) **EP 2 934 926 B1**
(45) Date de publication et mention de la délivrance du brevet: **15.03.2017**
(21) Numéro de dépôt: 13803068.9
(22) Date de dépôt: 13.12.2013
(51) Int. Cl.: B60H 1/00

(54) **APPAREIL DE VENTILATION, CHAUFFAGE ET/OU CLIMATISATION**
HEIZUNGS-, BELÜFTUNGS- ODER KLIMATISIERUNGSVORRICHTUNG
HEATING, VENTILATION AND/OR AIR-CONDITIONING APPARATUS

(30) Priorité: 21.12.2012 FR 1262581
(43) Date de publication de la demande: 28.10.2015
(73) Titulaire: Valeo Systèmes Thermiques, 78320 Le Mesnil-Saint-Denis (FR)
(72) Inventeur: PIERRES, Philippe, F-78990 Elancourt (FR)
(74) Mandataire: Metz, Gaëlle
(86) Numéro de dépôt international: PCT/EP2013/076558
(87) Numéro de publication internationale: WO 2014/095641

(56) Documents cités:
- EP-A1- 1 967 395
- EP-A2- 0 788 907
- DE-A1- 3 629 940
- DE-A1- 10 002 712

## Description

Le secteur technique de la présente invention est celui des appareils de ventilation, chauffage, et/ou climatisation assurant la gestion aérothermique d'un habitacle d'un véhicule automobile.

Il est connu d'assurer le traitement aérothermique d'un habitacle d'un véhicule au moyen d'une installation de ventilation, chauffage, et/ou climatisation installé dans l'habitacle. Une telle installation prend la forme d'un boîtier délimitant au moins un canal de circulation d'un flux d'air admis dans l'habitacle. Un échangeur thermique est installé dans le canal de circulation de manière à modifier la température du flux d'air avant d'être diffusé dans l'habitacle, en fonction des souhaits du ou des occupants du véhicule. Le boîtier comprend également un système de distribution canalisant le flux d'air vers différentes zones particulières de l'habitacle.

Le boîtier est en général installé dans l'habitacle, entre une planche du bord du véhicule et une paroi pare-feu séparant un compartiment avant du véhicule et l'habitacle.

Il existe plusieurs architectures connues d'installation de ventilation, chauffage, et/ou climatisation. Dans l'une de ces architectures, l'installation de ventilation, chauffage, et/ou climatisation comprend un bloc thermique installé au centre du véhicule selon un axe transversal et un groupe moto-ventilateur relié au bloc thermique, disposé latéralement par rapport au bloc thermique.

Selon une autre architecture, le bloc thermique et le groupe moto-ventilateur sont tous deux installés au centre du véhicule selon l'axe transversal, entre la planche de bord et la paroi pare-feu du véhicule. Une telle architecture est appelée "architecture centrée". Le document EP 1 967 395 décrit une telle architecture et l'ensemble des caractéristiques dans le préambule de la revendication 1.

Le document JP8-268040A divulgue une architecture centrée d'un appareil de ventilation, chauffage, et/ou climatisation comprenant un groupe moto-ventilateur ventilation, chauffage, et/ou climatisation comprenant un groupe moto-ventilateur qui propulse un flux d'air dans une zone de l'appareil située entre deux échangeurs thermiques. Le flux d'air se scinde en deux parties, chacune des parties se déplaçant au travers des échangeurs thermiques selon des sens globalement opposés. Les deux parties du flux d'air sont ensuite canalisées de sorte à se mélanger l'une à l'autre dans une chambre de mixage située dans une partie inférieure de l'installation de ventilation, chauffage, et/ou climatisation. A ce stade, le flux d'air effectue un changement de direction pour remonter dans une partie de distribution, avant de sortir de l'installation de ventilation, chauffage, et/ou climatisation.

Une telle organisation présente un premier inconvénient qui réside dans une augmentation significative de la perte de charge sur le flux d'air. En effet, la disposition des échangeurs thermiques par rapport à la direction d'arrivée du flux d'air en provenance du groupe moto-ventilateur génère un ralentissement de ce flux d'air lors de la traversée des échangeurs. Cette disposition est également à l'origine de nuisances sonores lorsque le flux d'air vient frapper une face d'entrée des échangeurs thermiques.

L'augmentation de perte de charge sur le flux d'air résulte également de la disposition de la chambre de mixage dans une partie basse de l'installation, qui contraint le flux d'air à effectuer une boucle à 180° pour atteindre la partie de distribution. Une telle réorientation du flux d'air est aussi génératrice de bruits aérauliques qui ne sont pas acceptables dans un habitacle de véhicule automobile.

Le but de la présente invention est donc de résoudre les inconvénients décrits ci-dessus principalement en concevant un appareil de ventilation, chauffage et/ou climatisation de type centré, dans lequel les échangeurs de chaleurs sont parcourus au moins en partie par un même flux d'air, selon un même sens de déplacement de celui-ci.

L'invention a donc pour objet un appareil de ventilation, chauffage et/ou climatisation apte à être monté contre un tablier séparant un habitacle d'un compartiment avant d'un véhicule, défini dans un repère orthonormé par un axe longitudinal, un axe transversal et un axe vertical, comprenant au moins un dispositif d'admission d'un flux d'air dans l'appareil, au moins un premier échangeur de chaleur et un deuxième échangeur de chaleur traversés par le flux d'air et présentant chacun une face d'entrée du flux d'air qui s'étend dans un plan sensiblement vertical, le dispositif d'admission du flux d'air étant disposé au dessus selon l'axe vertical et au moins en partie dans le prolongement d'au moins un des échangeurs de chaleur, caractérisé par le fait que les échangeurs de chaleurs sont agencés dans l'appareil de manière à ce qu'au moins une portion du flux d'air qui traverse le premier échangeur de chaleur traverse également le deuxième échangeur de chaleur, le flux d'air se déplaçant suivant l'axe transversal entre les deux échangeurs de chaleur. Une telle organisation évite tout changement de direction brutal du flux d'air à l'intérieur de l'appareil de ventilation, chauffage et/ou climatisation.

Suivant l'invention, le flux d'air se déplace selon l'axe transversal entre les deux échangeurs de chaleur. On peut donc considérer que ce flux d'air se déplace sensiblement horizontalement dans l'espace qui sépare le premier échangeur de chaleur du deuxième échangeur de chaleur.

Selon un autre exemple de l'invention, le deuxième échangeur de chaleur comprend au moins une première tubulure et une deuxième tubulure apte à être empruntées par un fluide caloporteur circulant dans le deuxième échangeur de chaleur, les tubulures s'étendant selon l'axe longitudinal en direction du tablier. Cette disposition permet d'éviter l'emploi de longues conduites de connexion pour raccorder le deuxième échangeur de chaleur à un circuit de fluide caloporteur.

Selon une caractéristique optionnelle de l'invention, la face d'entrée d'au moins un des échangeurs de chaleur est verticale. Il est également possible qu'une face d'entrée du premier échangeur de chaleur et qu'une face d'entrée du deuxième échangeur de chaleur soient toutes deux verticales. Cette ou ces dispositions facilitent la conception et le montage de l'appareil selon l'invention.

Le premier échangeur de chaleur peut comprendre un orifice d'entrée et un orifice de sortie d'un fluide réfrigérant, le premier échangeur de chaleur étant installé dans l'appareil de telle sorte que les orifices soient immédiatement adjacents au tablier. Cette disposition permet également d'éviter l'emploi de tubes qui cheminent le long ou dans l'appareil, habituellement utilisés pour raccorder le premier échangeur de chaleur à un circuit de fluide réfrigérant.

Selon un mode de réalisation, l'appareil de ventilation, chauffage et/ou climatisation comprend une chambre de mixage où se rencontre une première portion du flux d'air ayant traversée le deuxième échangeur de chaleur avec une deuxième portion du flux d'air ayant contournée le deuxième échangeur de chaleur, la chambre de mixage étant définie par une longueur formant sa plus grande dimension dans le repère orthonormé, la longueur s'étendant selon l'axe vertical. Cette structure permet de réaliser un appareil plus compact que celui de l'art antérieur.

Dans une telle situation, il est prévu un volet de mixage agencé pour contrôler la première et/ou la deuxième portion du flux d'air, ledit volet de mixage étant rotatif autour d'un axe qui s'étend selon l'axe vertical.

Selon un exemple de réalisation, la face d'entrée du premier échangeur de chaleur et la face d'entrée du deuxième échangeur de chaleur forment un angle aigu, et leur intersection s'étend parallèlement à l'axe vertical, notamment du côté du tablier.

Selon un autre mode de réalisation, l'appareil de ventilation, chauffage et/ou climatisation peut comprendre une chambre de mixage où se rencontre une première portion du flux d'air ayant traversée le deuxième échangeur de chaleur avec une deuxième portion du flux d'air ayant contournée le deuxième échangeur de chaleur, la chambre de mixage étant définie par une longueur formant sa plus grande dimension dans le repère orthonormé, la longueur s'étendant selon l'axe longitudinal.

Dans un tel cas, il est prévu un volet de mixage agencé pour contrôler la première et/ou la deuxième portion du flux d'air, ledit volet de mixage étant rotatif autour d'un axe qui s'étend selon l'axe longitudinal.

La disposition des échangeurs de chaleur dans l'appareil peut être opérée de sorte que le sommet de l'angle soit parallèle à l'axe longitudinal, par exemple du côté du dispositif d'admission d'air.

Selon un mode de réalisation, le bloc de distribution est agencé pour distribuer le flux d'air en au moins trois zones de l'habitacle, le bloc de distribution s'étendant au dessus, selon l'axe vertical, et au moins en partie dans le prolongement d'au moins un des échangeurs de chaleur.

Le bloc de distribution peut être au moins en partie immédiatement adjacent au dispositif d'admission du flux d'air. L'une ou l'autre des dispositions ci-dessus permettent d'optimiser l'encombrement extérieur de l'appareil de ventilation, chauffage et/ou climatisation selon l'invention.

Dans l'appareil décrit ci-dessus, le bloc de distribution loge un unique volet de répartition du flux d'air vers les zones de l'habitacle.

Le dispositif d'admission du flux d'air comprend au moins un boîtier d'entrée d'air, un moteur électrique qui entraîne en rotation une hélice radiale logée dans une volute, ladite volute s'étendant au dessus d'au moins un des échangeurs de chaleur selon l'axe vertical.

L'invention couvre aussi un ensemble formé par un tablier séparant un habitacle d'un compartiment avant d'un véhicule combiné à un appareil de ventilation, chauffage et/ou climatisation tel que décrit ci-dessus solidarisé contre le tablier. Un tout premier avantage selon l'invention réside dans la réduction des pertes de charge sur le flux d'air dans le cadre d'un appareil de ventilation, chauffage et/ou climatisation à architecture centrée.

Un autre avantage réside dans la réduction des nuisances sonores, en particulier des bruits aérauliques générés dans l'appareil.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles :
- la figure 1 est une vue en perspective d'un appareil de ventilation, chauffage et/ou climatisation selon l'invention,
- la figure 2 est une vue en coupe dans un plan longitudinal et vertical d'un appareil de ventilation, chauffage et/ou climatisation selon l'invention,
- la figure 3 est une vue en coupe dans un plan transversal et horizontal d'un appareil de ventilation, chauffage et/ou climatisation selon l'invention,
- la figure 4 est une vue en coupe dans un plan transversal et vertical d'une variante de l'invention,
- la figure 5 est une vue de côté de l'appareil de ventilation, chauffage et/ou climatisation selon la variante exposée à la figure 4.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Dans la description qui suit, les termes amont et aval sont employés. Ceux-ci s'analysent au regard du sens de déplacement du fluide considéré, par exemple le flux d'air circulant dans l'appareil de ventilation, chauffage et/ou climatisation selon l'invention. Les termes « dans le prolongement » signifient que le composant considéré est immédiatement au dessus de l'élément avec lequel sa position est comparée, une droite verticale passant ainsi par le composant et l'élément.

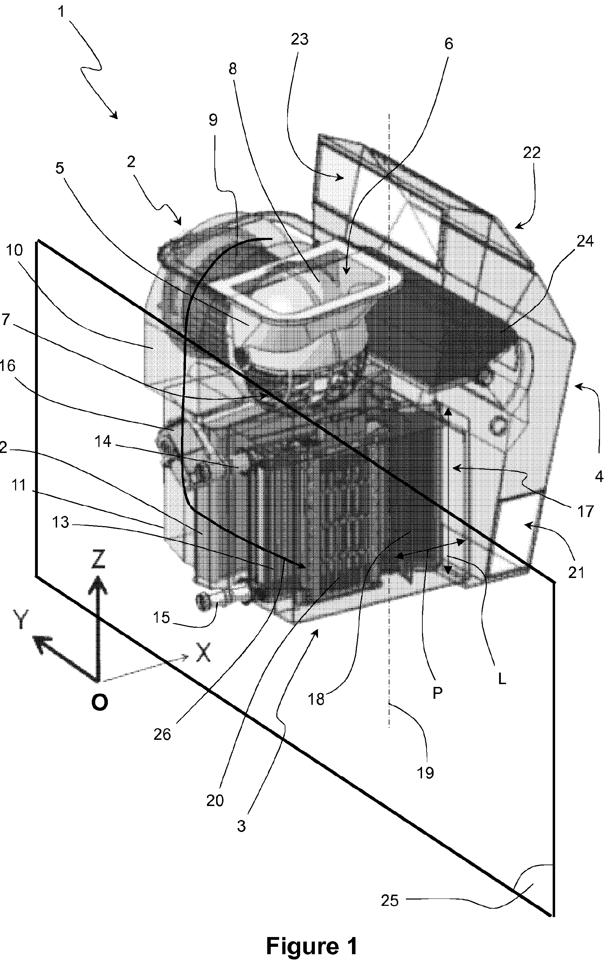

Les figures 1 à 3 illustrent un appareil de ventilation, chauffage et/ou climatisation 1 apte à être installé dans un habitacle de véhicule automobile, par exemple interposé entre un tablier 25 et une planche de bord de ce véhicule (non représentée).

Cet appareil de ventilation, chauffage et/ou climatisation 1 est défini dans un repère orthonormé OX-OY-OZ. La direction OX représente un axe longitudinal de l'appareil, un tel axe étant parallèle à la direction de déplacement du véhicule. La direction OY illustre un axe transversal perpendiculaire à l'axe longitudinal OX, l'axe transversal s'étendant entre les deux portes avant du véhicule. La direction OZ montre un axe vertical qui s'étend verticalement entre un plancher et un pavillon du véhicule. L'appareil de ventilation, chauffage et/ou climatisation 1 est montré sur les figures 1 à 3 et 5 dans une position solidarisée au tablier 25 du véhicule automobile.

L'appareil de ventilation, chauffage et/ou climatisation 1 comprend au moins un dispositif d'admission d'un flux d'air 2, un bloc thermique 3 et un bloc de distribution 4 connectés les uns aux autres de manière aéraulique.

Le dispositif d'admission du flux d'air 2 est un sous-ensemble qui, d'une part gère l'admission d'air à l'intérieur de l'appareil 1, et d'autre part génère un déplacement de l'air à l'intérieur de l'appareil de ventilation, chauffage et/ou climatisation 1 pour former un flux d'air 26. Ce dispositif d'admission du flux d'air 2 peut ainsi par exemple comprendre un boîtier d'entrée d'air 5 dans lequel sont ménagés une entrée d'air extérieur 6 et une entrée d'air intérieur 7. L'entrée d'air extérieur 6 s'étend par exemple dans un plan sensiblement horizontal et capte de l'air en provenance de l'extérieur de l'habitacle du véhicule. Quant à l'entrée d'air intérieur 7, celui-ci permet d'introduire dans l'appareil de ventilation, chauffage et/ou climatisation 1 de l'air provenant de l'habitacle. Il prend par exemple la forme d'un quart de sphère, notamment grillagé. Un volet de réglage de l'entrée d'air 8, par exemple de forme sphérique, peut être installé dans le boîtier d'entrée d'air 5 de manière à gérer la provenance de l'air, en obstruant ou libérant plus ou moins les entrées d'air 6 et 7.

Le dispositif d'admission du flux d'air 2 comprend également un pulseur. Ce dernier comprend un moteur électrique entraînant en rotation une hélice radiale 9, cette dernière formant une hélice en cage d'écureuil. Le moteur électrique comprend un arbre d'entraînement de l'hélice radiale 9 qui s'étend selon l'axe transversal OY. Une partie arrière du moteur électrique peut ainsi être logée dans une demi-sphère délimitée par le débattement du volet de réglage de l'entrée d'air 8 défini par une première position extrême à une seconde position extrême dans le boîtier d'entrée d'air 5.

L'hélice radiale 9 est reçue dans une volute 10, cette dernière suivant un profil en forme d'escargot permettant une mise en mouvement du flux d'air.

Le bloc thermique 3 est la partie de l'appareil de ventilation, chauffage et/ou climatisation 1 où le flux d'air mis en mouvement par le dispositif d'admission 2 du flux d'air est traité thermiquement, c'est-à-dire chauffé ou refroidi. Le bloc thermique 3 comprend ainsi au moins un premier échangeur de chaleur 12 et un deuxième échangeur de chaleur 13 aptes à être traversés par le flux d'air 26, ces échangeurs de chaleur étant maintenus dans un boîtier délimitant le bloc thermique 3.

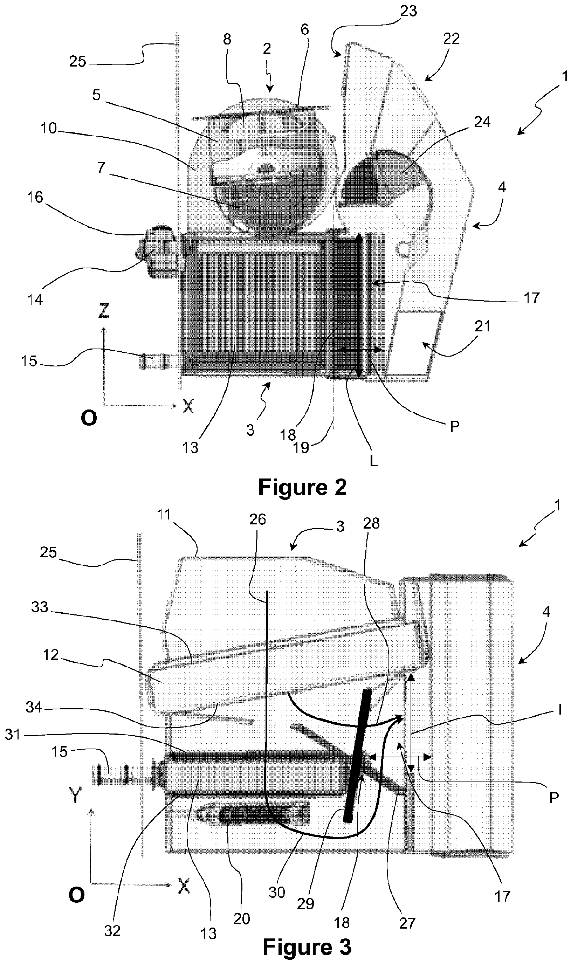

Ce flux d'air 26 entre dans chaque échangeur de chaleur 12, 13 par une face d'entrée et en ressort par une face de sortie (visibles sur la figure 3). Ces faces d'entrée s'étendent dans un plan vertical, ou sensiblement vertical, dans lequel s'inscrit l'axe vertical OZ.

Selon le sens de déplacement du flux d'air 26 dans le bloc thermique 3, le premier échangeur de chaleur 12 est installé en amont du deuxième échangeur de chaleur 13. Selon un exemple de réalisation, l'intégralité du flux d'air 26 traverse le premier échangeur de chaleur 12.

Le bloc thermique 3 loge le premier échangeur de chaleur 12, ce dernier étant par exemple un évaporateur constitutif d'un circuit de fluide réfrigérant. Selon cet exemple, ce premier échangeur de chaleur 12 refroidit le flux d'air 26 traversant cet échangeur de chaleur 12. Le fluide réfrigérant pénètre dans le premier échangeur de chaleur 12 par un orifice d'entrée, et sort de ce même échangeur par un orifice de sortie. Ces orifices ne sont pas visibles sur cette figure car un organe de détente 16 est fixé au droit de ces orifices. On notera cependant que l'orifice d'entrée et / ou l'orifice de sortie de l'échangeur de chaleur 12 sont adjacents au tablier 25. Ces orifices s'étendent ainsi dans un plan parallèle, ou sensiblement parallèle, à un plan dans lequel s'inscrivent l'axe transversal OY et l'axe vertical OZ.

Le deuxième échangeur de chaleur 13 est un radiateur de chauffage dont le volume interne est parcouru par un fluide caloporteur, par exemple de l'eau additionnée de glycol. Selon l'exemple des figures 1 à 3, la circulation du fluide caloporteur dans le volume interne est du type en « I », c'est-à-dire une entrée du fluide caloporteur par une première boîte située à une première extrémité et une sortie de ce même fluide par une deuxième boîte situé à une deuxième extrémité opposée à la première extrémité par rapport à un faisceau de tubes.

Ce deuxième échangeur de chaleur 13 comprend au moins une première tubulure 14 et une deuxième tubulure 15 par lesquels le fluide caloporteur entre dans le deuxième échangeur de chaleur 13. De tels tubulures sont brasées sur le deuxième échangeur de chaleur et s'étendent selon une direction rectiligne parallèle à l'axe longitudinal OX. Ces tubulures traversent le boîtier délimitant le bloc thermique 3 et débouchent longitudinalement du côté du tablier 25 du véhicule, de sorte à traverser celui-ci selon l'axe longitudinal OX.

Selon un mode de réalisation particulier, au moins un des orifices du deuxième échangeur de chaleur 13 est adjacent au tablier 25 du véhicule.

Selon un mode de réalisation particulier, les orifices de sortie respectivement des échangeurs de chaleur 12 et 13 traversent le tablier 25 du véhicule par un même orifice.

La volute 10 est aérauliquement reliée au bloc thermique 3 par un divergent 11. Ce dernier a pour fonction de répartir le flux d'air 26 sortant de la volute 10 sur toute la face d'entrée du premier échangeur de chaleur 12.

Selon l'invention, le dispositif d'admission 2 du flux d'air est disposé au dessus, selon l'axe vertical OZ, et au moins en partie dans le prolongement du bloc thermique 3. On comprend ici que le dispositif d'admission 2 du flux d'air chevauche au moins l'un des deux échangeurs de chaleurs 12 ou 13. Selon l'exemple de la figure 1, le dispositif d'admission 2 du flux d'air est au dessus et dans le prolongement d'au moins un des deux échangeurs de chaleur 12 et 13.

Le bloc thermique 3 peut encore comprendre une chambre de mixage 17 où se rencontrent une première portion du flux d'air ayant traversée les échangeurs de chaleur 12 et 13 avec une deuxième portion du flux d'air ayant traversé l'échangeur de chaleur 12 mais ayant contournée le deuxième échangeur de chaleur 13. La première portion du flux d'air peut ainsi être chauffée lors de son passage au travers du deuxième échangeur de chaleur 13, et mélangée avec la deuxième portion du flux d'air qui n'a pas été chauffée.

Ces deux portions de flux d'air se mélangent dans la chambre de mixage 17, cette dernière étant définie par une longueur L et une profondeur P. La longueur L est la dimension la plus grande définissant la chambre de mixage 17, selon le repère orthonormé OX-OY-OZ. La longueur L s'étend et se mesure selon l'axe vertical OZ. La profondeur P s'étend et se mesure selon l'axe longitudinal OX. La chambre de mixage 17 est encore définie par une largeur l (visible sur la figure 3) qui s'étend et se mesure selon l'axe transversal OY. On comprend de ce qui précède que la chambre de mixage 17 s'étend majoritairement selon l'axe vertical OZ.

La proportion d'air formant la première portion du flux d'air et/ou la deuxième portion du flux d'air peut être gérée par un volet de mixage 18, ce dernier pouvant être du type drapeau, papillon, tambour ou film. Dans l'exemple des figures 1 à 3, le volet de mixage 18 est un volet papillon, où deux ailes s'étendent de part et d'autre d'un arbre de rotation. Selon cet exemple, ce volet de mixage 18 est rotatif autour d'un axe 19 qui s'étend verticalement, c'est-à-dire parallèlement à l'axe vertical OZ.

Le bloc thermique 3 peut également loger un troisième échangeur de chaleur 20 installé en aval du deuxième échangeur de chaleur 13. Selon un exemple de réalisation, ce troisième échangeur de chaleur 20 est un radiateur électrique de chauffage, par exemple du type à coefficient de température positif. Un tel radiateur électrique présente au moins un connecteur électrique qui débouche du boîtier délimitant le bloc thermique 3 au niveau d'une face de boîtier qui est en regard du dispositif d'admission 2 du flux d'air. De manière complémentaire, un tel radiateur électrique peut comprendre son propre dispositif de commande et de protection.

Selon un mode de réalisation particulier, le dispositif d'admission 2 du flux d'air est disposé au dessus selon l'axe vertical OZ et au moins en partie dans le prolongement d'au moins l'un des trois échangeurs de chaleur 12, 13 et 20.

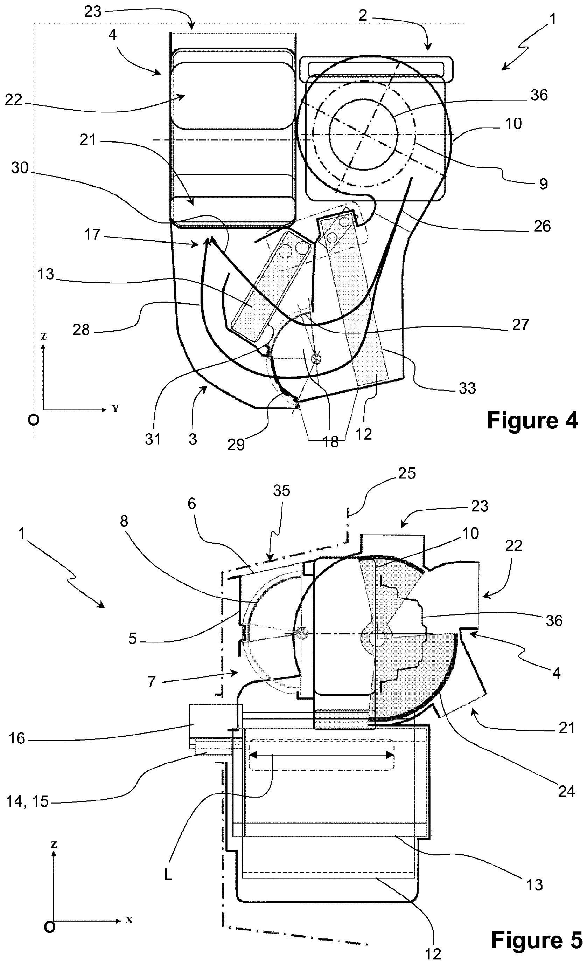

La chambre de mixage 17 est en communication aéraulique avec le bloc de distribution 4, dont la fonction est de canaliser et de répartir le flux d'air traité thermiquement vers des bouches de sorties. Le bloc de distribution 4 est ainsi agencé pour distribuer le flux d'air en au moins trois zones de l'habitacle, par exemple une zone pieds, une zone de visage et une zone de pare-brise. Pour ce faire, et comme illustré en figure 4 et 5, le bloc de distribution 4 est délimité par un boîtier dans lequel sont ménagées en partie inférieure de ce boîtier une ou deux premières bouches 21 dédiées à la zone pieds, une deuxième bouche 22 dédiée à la zone du visage et une troisième bouche 23 dédiée à la zone du pare-brise. A titre d'exemple, la troisième bouche 23 est ménagée dans le boîtier du bloc de distribution 4 de manière à s'étendre dans un plan vertical et transversal. Cette troisième bouche 23 s'étend au dessus, selon l'axe vertical OZ, du dispositif d'admission 2 du flux d'air.

Le bloc de distribution 4 peut comprendre un unique volet de répartition 24 du flux d'air vers les zones de l'habitacle. Selon l'exemple des figures 1 à 3, le volet de répartition 24 est un volet tambour capable de contrôler la circulation du flux d'air à l'intérieur du boîtier délimitant le bloc de distribution 4.

Il est illustré en figure 3 un appareil de ventilation, chauffage et/ou climatisation 1 selon une coupe horizontale réalisée, traversant le premier échangeur de chaleur 12 et le deuxième échangeur de chaleur 13. Le flux d'air 26 traverse le faisceau de tubes ou de plaques du premier échangeur de chaleur 12, puis se scinde en une ou deux portions, en fonction de la position du volet de mixage 18. Il est illustré en Figure 3, le volet de mixage 18 en trait plein selon une première position extrême 27 dans laquelle le flux d'air 26 qui va être distribué dans l'habitacle, n'est pas chauffé. En effet, la circulation du flux d'air 26 qui traverse le deuxième échangeur de chaleur 13 est bloquée par au moins l'une des ailes du volet de mixage 18. Dans un tel cas, la deuxième portion du flux d'air, ici référencée 28, est équivalente au flux d'air 26.

Le volet de mixage 18 est aussi représenté en pointillé dans une seconde position extrême 29 dans laquelle l'ensemble du flux d'air 26 va être chauffé avant d'être distribué dans l'habitacle. En effet, l'intégralité du flux d'air 26 traversant le premier échangeur de chaleur 12 est canalisée vers le deuxième échangeur de chaleur 13, formant ainsi la première portion de flux d'air, référencée ici 30.

Bien entendu, le volet de mixage 18 peut prendre toutes positions intermédiaires entre la première position extrême 27 et la deuxième position extrême 29, permettant ainsi d'assurer un mélange de la première portion de flux d'air 30 avec la deuxième portion de flux d'air 28.

Le premier échangeur de chaleur 12 est délimité par une face d'entrée 33 et par une face de sortie 34, qui s'étend dans un plan parallèle au plan de la face d'entrée 33. La face d'entrée 33 est celle par laquelle le flux d'air 26 entre dans le premier échangeur de chaleur 12 et la face de sortie 34 est celle par laquelle ce flux d'air 26 en sort. Selon un exemple de réalisation, la face d'entrée 33 est verticale, ou sensiblement verticale. De manière complémentaire, cette face d'entrée 33 est perpendiculaire, ou sensiblement perpendiculaire, au plan dans lequel s'étend le tablier 25.

Le deuxième échangeur de chaleur 13 est délimité par une face d'entrée 31 et par une face de sortie 32, qui s'étend dans un plan parallèle au plan de la face d'entrée 31. La face d'entrée 31 est celle par laquelle le flux d'air 26 entre dans le deuxième échangeur de chaleur 13 et la face de sortie 32 est celle par laquelle la première portion du flux d'air 30 en sort. Selon un exemple de réalisation, la face d'entrée 31 est verticale, ou sensiblement verticale. De manière complémentaire, cette face d'entrée 31 est perpendiculaire, ou sensiblement perpendiculaire, au plan dans lequel s'étend le tablier 25.

Selon une variante de réalisation, l'un des deux échangeurs de chaleur peut être incliné par rapport à l'autre. Autrement dit, la face d'entrée 33 du premier échangeur de chaleur 12 et la face d'entrée 31 du deuxième échangeur de chaleur 13 peuvent former un angle aigu, et leur intersection s'étend parallèlement à l'axe vertical OZ. Le sommet de cet angle est formé du côté du tablier 25.

Il est également illustré en figure 3 la circulation du flux d'air 26 entre les deux échangeurs de chaleur 12 et 13. Selon un exemple de l'invention, ce flux d'air 26 se déplace entre les deux échangeurs de chaleur selon l'axe transversal OY, c'est-à-dire horizontalement, ou sensiblement horizontalement.

Les figures 4 et 5 montrent une variante de réalisation de l'invention. Alors que dans le mode de réalisation des figures 1 à 3, le dispositif d'admission du flux d'air 2 et le bloc de distribution 4 sont côte-à-côte selon l'axe longitudinal OX, l'appareil de ventilation, chauffage et/ou climatisation 1 selon cette variante prévoit un alignement du dispositif d'admission du flux d'air 2 et du bloc de distribution 4 selon l'axe transversal OY.

Le dispositif d'admission 2 du flux d'air et le bloc de distribution 4 sont, selon un mode de réalisation particulier, coaxiaux.

Tel qu'illustré sur les figures 4 et 5, le dispositif d'admission du flux d'air 2 et le bloc de distribution 4 s'étendent tous deux au moins en partie au dessus et dans le prolongement du bloc thermique 3, à savoir au moins en partie au dessus et dans le prolongement d'au moins l'un des échangeurs de chaleur 12, 13 et 20, selon l'axe vertical OZ selon un exemple de réalisation.

Selon un mode de réalisation, le dispositif d'admission du flux d'air 2 chevauche le premier échangeur de chaleur 12, autrement dit est positionné au dessus de l'échangeur de chaleur 12, alors que le bloc de distribution 4 chevauche le deuxième échangeur de chaleur 13, autrement dit est positionné au dessus de l'échangeur de chaleur 13.

Selon cette variante de réalisation, le moteur électrique 36 du pulseur positionné dans le dispositif d'admission du flux d'air 2 comprend un arbre de rotation qui s'étend selon l'axe longitudinal OX.

Selon cette variante de réalisation de l'invention, le bloc de distribution 4 est au moins en partie immédiatement adjacent au dispositif d'admission du flux d'air 2. Par exemple, le boîtier du bloc de distribution 4 et la volute 10 peuvent être en contact l'un contre l'autre. Selon un autre exemple, un même boîtier comprend au moins en partie la volute 10 et au moins en partie le bloc de distribution 4.

Comme pour le mode de réalisation des figures 1 à 3, le bloc de distribution 4 comprend une première bouche de sortie 21 affectée à la zone pieds de l'habitacle du véhicule, une deuxième bouche de sortie 22 affectée à la zone de visage de l'habitacle et une troisième bouche de sortie 23 affectée à la zone de pare-brise.

Selon cette variante, la face d'entrée 33 du premier échangeur de chaleur 12 et la face d'entrée 31 du deuxième échangeur de chaleur 13 s'étendent dans un plan sensiblement vertical, c'est-à-dire compris entre 0° et 45° par rapport à l'axe vertical OZ. Ces faces d'entrée 31 et 33 s'étendent également le long de l'axe longitudinal OX.

La face d'entrée 33 du premier échangeur de chaleur 12 et la face d'entrée 31 du deuxième échangeur de chaleur 13 peuvent former un angle aigu, et leur intersection s'étend parallèlement à l'axe longitudinal OX. Le sommet de cet angle est alors par exemple formé du côté du dispositif d'admission du flux d'air 2.

Comme illustré en Figure 4, le flux d'air 26 se déplace selon l'axe transversal OY depuis le premier échangeur de chaleur 12 vers le deuxième échangeur de chaleur 13. Le bloc thermique 3 délimite la chambre de mixage 17 et loge un volet de mixage 18 par exemple de type tambour. Le volet est représenté en trait plein dans la première position extrême 27 dans laquelle le flux d'air qui va être distribué dans l'habitacle n'est pas chauffé, et en trait pointillé dans la seconde position extrême 29 dans laquelle le flux d'air va être chauffé avant d'être distribué dans l'habitacle.

Selon cette variante de réalisation, la longueur L de la chambre de mixage 17, formant la dimension la plus grande de la chambre de mixage dans le repère orthonormé, s'étend selon l'axe longitudinal OX.

Selon cette variante, le volet de mixage 18 est un volet tambour dont l'axe de rotation s'étend selon l'axe longitudinal OX. Ce volet de mixage 18 est ici installé dans le bloc thermique 3 de manière à pivoter entre les deux échangeurs de chaleur 12 et 13. La première portion du flux d'air 30 est donc susceptible de traverser le deuxième échangeur de chaleur 13, alors que la deuxième portion du flux d'air 28 est en mesure de contourner ce deuxième échangeur de chaleur 13, en fonction de la position du volet de mixage 18.

La figure 5 est une vue schématique de côté d'une variante de réalisation de l'appareil de ventilation, chauffage et/ou climatisation 1. Cet appareil est ici logé dans un renfoncement 35 ménagé dans le tablier 25 vers l'habitacle.

Tel qu'illustré en Figure 5, le boîtier d'entrée d'air 5 comprend une entrée d'air intérieur 7 qui fait face à la paroi située dans le creux du renfoncement 35, et une entrée d'air extérieur 6 qui fait face à un flanc du renfoncement 35.

Le volet de réglage de l'entrée d'air 8 est par exemple un volet tambour capable d'obturer ou d'ouvrir l'une ou l'autre des entrées d'air 6, 7.

La ou les tubulures 14, 15 du deuxième échangeur de chaleur 13 traversent rectilignement le tablier 25. L'organe de détente 16 fixé au droit des orifices d'entrée et de sortie du premier échangeur de chaleur 12 traverse également le tablier 25. Selon un mode de réalisation particulier, au moins un des orifices du deuxième échangeur de chaleur 13 est adjacent au tablier 25.

Les orifices de sortie respectivement des échangeurs de chaleur 12 et 13 traversent le tablier 25 du véhicule par un même orifice, selon un mode de réalisation.

Selon cette variante de réalisation, le bloc de distribution 4 loge par exemple, un unique volet de répartition 24, dont l'axe de rotation s'étend parallèlement à l'axe transversal OY. Il s'agit d'un volet tambour comprenant deux ailes semi-circulaires distinctes, chacune reliée à un arbre de rotation par des flancs.

Selon un mode de réalisation particulier, l'axe du volet de réglage de l'entrée d'air et l'axe du volet de répartition 24 sont parallèles.

Tel que représenté sur la figure 5, une ouverture formée par les deux ailes semi-circulaires est utilisée pour autoriser une circulation du flux d'air vers la deuxième bouche de sortie 22, les première et troisième bouches de sortie étant obstruées par les ailes constitutives du volet de répartition 24.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association.

## Revendications

1. Appareil de chauffage, ventilation et/ou climatisation (1) apte à être monté contre un tablier (25) séparant un habitacle d'un compartiment avant d'un véhicule, défini dans un repère orthonormé par un axe longitudinal (OX), un axe transversal (OY) et un axe vertical (OZ), comprenant
au moins un dispositif d'admission (2) d'un flux d'air (26) dans l'appareil (1),
au moins un premier échangeur de chaleur (12) et un deuxième échangeur de chaleur (13) traversés par le flux d'air (26) et présentant chacun une face d'entrée (31, 33) du flux d'air (26) qui s'étend dans un plan sensiblement vertical,
le dispositif d'admission (2) du flux d'air (26) étant disposé au dessus selon l'axe vertical (OZ) et au moins en partie dans le prolongement d'au moins un des échangeurs de chaleur (12, 13, 20),
les échangeurs de chaleur (12, 13) sont agencés dans l'appareil de chauffage, ventilation et/ou climatisation (1) de manière à ce qu'au moins une portion du flux d'air (26) qui traverse le premier échangeur de chaleur (12) traverse également le deuxième échangeur de chaleur (13),
**caractérisé en ce que** le flux d'air (26) se déplace selon l'axe transversal (OY) entre les deux échangeurs de chaleur (12, 13).

2. Appareil selon la revendication 1, dans lequel le deuxième échangeur de chaleur (13) comprend au moins une première tubulure (14) et une deuxième tubulure (15) apte à être empruntées par un fluide caloporteur circulant dans le deuxième échangeur de chaleur, les tubulures (14, 15) s'étendant selon l'axe longitudinal (OX) en direction du tablier (25).

3. Appareil selon l'une quelconque des revendications précédentes, dans lequel la face d'entrée (31, 33) d'au moins un des échangeurs de chaleur (12, 13) est verticale.

4. Appareil selon l'une quelconque des revendications précédentes, dans lequel le premier échangeur de chaleur (12) comprend un orifice d'entrée et un orifice de sortie d'un fluide réfrigérant, le premier échangeur de chaleur (12) étant installé dans l'appareil (1) de telle sorte que les orifices soient immédiatement adjacents au tablier (25).

5. Appareil selon l'une quelconque des revendications précédentes, dans lequel est prévu une chambre de mixage (17) où se rencontre une première portion (30) du flux d'air (26) ayant traversée le deuxième échangeur de chaleur (13) avec une deuxième portion (28) du flux d'air ayant contournée le deuxième échangeur (13), la chambre de mixage (17) étant définie par une longueur (L) formant sa plus grande dimension dans le repère orthonormé, la longueur (L) s'étendant selon l'axe vertical (OZ).

6. Appareil selon la revendication 5, comprenant un volet de mixage (18) agencé pour contrôler la première portion (30) du flux d'air (26) et/ou la deuxième portion (28) du flux d'air (26), ledit volet de mixage (18) étant rotatif autour d'un axe (19) qui s'étend selon l'axe vertical (OZ).

7. Appareil selon l'une quelconque des revendications précédentes, dans lequel la face d'entrée (33) du premier échangeur de chaleur (12) et la face d'entrée (31) du deuxième échangeur de chaleur (13) forment un angle aigu, et leur intersection s'étend parallèlement à l'axe vertical (OZ).

8. Appareil selon l'une quelconque des revendications 1 à 4, dans lequel est prévu une chambre de mixage (17) où se rencontre une première portion (30) du flux d'air (26) ayant traversée le deuxième échangeur de chaleur (13) avec une deuxième portion (28) du flux d'air (26) ayant contournée le deuxième échangeur de chaleur (13), la chambre de mixage (17) étant définie par une longueur (L) formant sa plus grande dimension dans le repère orthonormé, la longueur (L) s'étendant selon l'axe longitudinal (OX).

9. Appareil selon la revendication 8, comprenant un volet de mixage (18) agencé pour contrôler la première portion (30) du flux d'air (26) et/ou la deuxième portion (28) du flux d'air (26), ledit volet de mixage (18) étant rotatif autour d'un axe qui s'étend selon l'axe longitudinal (OX).

10. Appareil selon l'une quelconque des revendications 8 ou 9, comprenant un bloc de distribution (4) agencé pour distribuer le flux d'air en au moins trois zones de l'habitacle, le bloc de distribution (4) s'étendant au dessus et au moins en partie dans le prolongement d'au moins un des échangeurs de chaleur (12, 13).

11. Appareil selon la revendication 10, dans lequel le bloc de distribution (4) est au moins en partie immédiatement adjacent au dispositif d'admission (2) du flux d'air (26).

12. Appareil selon l'une quelconque des revendications précédentes, dans lequel le dispositif d'admission (2) du flux d'air comprend un boîtier d'entrée d'air (5), un moteur électrique (36) qui entraîne en rotation une hélice radiale (9) logée dans une volute (10), ladite volute (10) s'étendant au dessus d'au moins un des échangeurs de chaleur (12, 13) selon l'axe vertical (OZ).

13. Appareil selon l'une quelconque des revendications précédentes, comprenant un bloc de distribution (4) agencé pour distribuer le flux d'air (26) en au moins trois zones de l'habitacle, le bloc de distribution (4) logeant un unique volet de répartition (24) du flux d'air (26) vers les zones de l'habitacle.

14. Ensemble comprenant un tablier (25) séparant un habitacle d'un compartiment avant d'un véhicule et un appareil (1) de ventilation, chauffage et/ou climatisation selon l'une quelconque des revendications précédentes solidarisé contre le tablier (25).

## Patentansprüche

1. Heiz-, Lüftungs- und/oder Klimagerät (1), das gegen eine Spritzwand (25) montiert werden kann, die einen Fahrzeuginnenraum von einem vorderen Raum eines Fahrzeugs trennt, in einem orthonormierten Bezugssystem durch eine Längsachse (OX), eine Querachse (OY) und eine senkrechte Achse (OZ) definiert, das enthält
mindestens eine Ansaugvorrichtung (2) eines Luftstroms (26) in das Gerät (1),
mindestens einen ersten Wärmetauscher (12) und einen zweiten Wärmetauscher (13), die vom Luftstrom (26) durchquert werden und je eine Eingangsseite (31, 33) des Luftstroms (26) aufweisen, die sich in einer im Wesentlichen senkrechten Ebene erstreckt,
wobei die Ansaugvorrichtung (2) des Luftstroms (26) über der senkrechten Achse (OZ) und zumindest teilweise in der Verlängerung mindestens eines der Wärmetauscher (12, 13, 20) angeordnet ist,
die Wärmetauscher (12, 13) im Heiz-, Lüftungs- und/oder Klimagerät (1) so eingerichtet sind, dass mindestens ein Teil des den ersten Wärmetauscher (12) durchquerenden Luftstroms (26) ebenfalls den zweiten Wärmetauscher (13) durchquert,
**dadurch gekennzeichnet, dass** der Luftstrom (26) sich gemäß der Querachse (OY) zwischen den zwei Wärmetauschern (12, 13) bewegt.

2. Gerät nach Anspruch 1, wobei der zweite Wärmetauscher (13) mindestens einen ersten Anschlussstutzen (14) und einen zweiten Anschlussstutzen (15) enthält, durch die ein Wärmeträgerfluid gehen kann, das im zweiten Wärmetauscher fließt, wobei die Anschlussstutzen (14, 15) sich gemäß der Längsachse (OX) in Richtung der Spritzwand (25) erstrecken.

3. Gerät nach einem der vorhergehenden Ansprüche, wobei die Eingangsseite (31, 33) mindestens eines der Wärmetauscher (12, 13) senkrecht ist.

4. Gerät nach einem der vorhergehenden Ansprüche, wobei der erste Wärmetauscher (12) eine Eingangsöffnung und eine Ausgangsöffnung eines Kühlfluids enthält, wobei der erste Wärmetauscher (12) derart im Gerät (1) installiert ist, dass die Öffnungen der Spritzwand (25) direkt benachbart sind.

5. Gerät nach einem der vorhergehenden Ansprüche, wobei eine Mischkammer (17) vorgesehen ist, in der sich ein erster Teil (30) des Luftstroms (26), der den zweiten Wärmetauscher (13) durchquert hat, und ein zweiter Teil (28) des Luftstroms begegnen, der den zweiten Tauscher (13) umströmt hat, wobei die Mischkammer (17) durch eine Länge (L) definiert wird, die ihre größte Abmessung im orthonormierten Bezugssystem bildet, wobei die Länge (L) sich gemäß der senkrechten Achse (OZ) erstreckt.

6. Gerät nach Anspruch 5, das eine Mischklappe (18) enthält, die eingerichtet ist, um den ersten Teil (30) des Luftstroms (26) und/oder den zweiten Teil (28) des Luftstroms (26) zu kontrollieren, wobei die Mischklappe (18) um eine Achse (19) drehbar ist, die sich gemäß der senkrechten Achse (OZ) erstreckt.

7. Gerät nach einem der vorhergehenden Ansprüche, wobei die Eingangsseite (33) des ersten Wärmetauschers (12) und die Eingangsseite (31) des zweiten Wärmetauschers (13) einen spitzen Winkel bilden, und ihr Schnittpunkt erstreckt sich parallel zur senkrechten Achse (OZ).

8. Gerät nach einem der Ansprüche 1 bis 4, wobei eine Mischkammer (17) vorgesehen ist, in der sich ein erster Teil (30) des Luftstroms (26), der den zweiten Wärmetauscher (13) durchquert hat, einem zweiten Teil (28) des Luftstroms (26) begegnet, der den zweiten Wärmetauscher (13) umströmt hat, wobei die Mischkammer (17) durch eine Länge (L) definiert wird, die ihre größte Abmessung im orthonormierten Bezugssystem bildet, wobei die Länge (L) sich gemäß der Längsachse (OX) erstreckt.

9. Gerät nach Anspruch 8, das eine Mischklappe (18) enthält, die eingerichtet ist, um den ersten Teil (30) des Luftstroms (26) und/oder den zweiten Teil (28) des Luftstroms (26) zu kontrollieren, wobei die Mischklappe (18) um eine Achse drehbar ist, die sich gemäß der Längsachse (OX) erstreckt.

10. Gerät nach einem der Ansprüche 8 oder 9, das einen Verteilerblock (4) enthält, der eingerichtet ist, um den Luftstrom in mindestens drei Zonen des Fahrzeuginnenraums zu verteilen, wobei der Verteilerblock (4) sich über und zumindest zum Teil in der Verlängerung mindestens eines der Wärmetauscher (12, 13) erstreckt.

11. Gerät nach Anspruch 10, wobei der Verteilerblock (4) zumindest zum Teil der Ansaugvorrichtung (2) des Luftstroms (26) direkt benachbart ist.

12. Gerät nach einem der vorhergehenden Ansprüche, wobei die Ansaugvorrichtung (2) des Luftstroms ein Lufteintrittsgehäuse (5) und einen Elektromotor (36) enthält, der ein radiales Lüfterrad (9) antreibt, das in einem Spiralgehäuse (10) angeordnet ist, wobei das Spiralgehäuse (10) sich über mindestens einem der Wärmetauscher (12, 13) gemäß der senkrechten Achse (OZ) erstreckt.

13. Gerät nach einem der vorhergehenden Ansprüche, das einen Verteilerblock (4) enthält, der eingerichtet ist, um den Luftstrom (26) in mindestens drei Zonen des Fahrzeuginnenraums zu verteilen, wobei der Verteilerblock (4) eine einzige Verteilerklappe (24) des Luftstroms (26) zu den Zonen des Fahrzeuginnenraums aufnimmt.

14. Einheit, die eine Spritzwand (25), die einen Fahrzeuginnenraum von einem vorderen Raum eines Fahrzeugs trennt, und ein Heiz-, Lüftungs- und/oder Klimagerät (1) nach einem der vorhergehenden Ansprüche enthält, das fest mit der Spritzwand (25) verbunden ist.

## Claims

1. Heating, ventilation and/or air-conditioning apparatus (1) able to be mounted against a bulkhead (25) separating an interior from a forward compartment of a vehicle, defined in an orthonormal frame of reference by a longitudinal axis (OX), a transverse axis (OY) and a vertical axis (OZ), comprising
at least one device (2) for admitting an air flow (26) into the apparatus (1),
at least one first heat exchanger (12) and one second heat exchanger (13) through which the air flow (26) passes and each having an inlet face (31, 33) for the air flow (26) which extends in a substantially vertical plane,
the device (2) for admitting the air flow (26) being positioned above, along the vertical axis (OZ), and at least partially in the continuation of, at least one of the heat exchangers (12, 13, 20) ;
the heat exchangers (12, 13) are arranged in the heating, ventilation and/or air-conditioning apparatus (1) so that at least a portion of the air flow (26) that passes through the first heat exchanger (12) also passes through the second heat exchanger (13),
**characterized in that** the air flow (26) moves along the transverse axis (OY) between the two heat exchangers (12, 13).

2. Apparatus according to Claim 1, in which the second heat exchanger (13) comprises at least one first pipe (14) and one second pipe (15) that a heat-transfer fluid circulating through the second heat exchanger can follow, the pipes (14, 15) extending along the longitudinal axis (OX) in the direction of the bulkhead (25).

3. Apparatus according to either one of the preceding claims, in which the inlet face (31, 33) of at least one of the heat exchangers (12, 13) is vertical.

4. Apparatus according to any one of the preceding claims, in which the first heat exchanger (12) comprises an inlet orifice and an outlet orifice for a refrigerant, the first heat exchanger (12) being installed in the apparatus (1) in such a way that the orifices are immediately adjacent to the bulkhead (25).

5. Apparatus according to any one of the preceding claims, in which there is provided a mixing chamber (17) in which a first portion (30) of the air flow (26) that has passed through the second heat exchanger (13) and a second portion (28) of the air flow (26) that has bypassed the second exchanger (13) meet, the mixing chamber (17) being defined by a length (L) forming its longest dimension in the orthonormal frame of reference, the length (L) extending along the vertical axis (OZ).

6. Apparatus according to Claim 5, comprising a mixing flap (18) designed to control the first portion (30) of the air flow (26) and/or the second portion (28) of the air flow (26), said mixing flap (18) being able to rotate about an axle (19) which extends along the vertical axis (OZ).

7. Apparatus according to any one of the preceding claims, in which the inlet face (33) of the first heat exchanger (12) and the inlet face (31) of the second heat exchanger (13) form an acute angle, and the intersection thereof runs parallel to the vertical axis (OZ).

8. Apparatus according to any one of Claims 1 to 4, in which there is provided a mixing chamber (17) in which a first portion (30) of the air flow (26) that has passed through the second heat exchanger (13) and a second portion (28) of the air flow (26) that has bypassed the second heat exchanger (13) meet, the mixing chamber (17) being defined by a length (L) forming its longest dimension in the orthonormal frame of reference, the length (L) extending along the longitudinal axis (OX).

9. Apparatus according to Claim 8, comprising a mixing flap (18) designed to control the first portion (30) of the air flow (26) and/or the second portion (28) of the air flow (26), said mixing flap (18) being able to rotate about an axle which extends along the longitudinal axis (OX).

10. Apparatus according to either one of Claims 8 and 9, comprising a distribution unit (4) designed to distribute the air flow to at least three zones of the vehicle interior, the distribution unit (4) extending above and at least partially in the continuation of, at least one of the heat exchangers (12, 13).

11. Apparatus according to Claim 10, in which the distribution unit (4) is at least partially immediately adjacent to the device (2) for admitting the air flow (26).

12. Apparatus according to any one of the preceding claims, in which the device (2) for admitting the air flow comprises an air inlet housing (5), an electric motor (36) driving the rotation of a radial blower wheel (9) housed in a blower housing (10), said blower housing (10) extending above at least one of the heat exchangers (12, 13) along the vertical axis (OZ).

13. Apparatus according to any one of the preceding claims, comprising a distribution unit (4) designed to distribute the air flow (26) to at least three zones of the vehicle interior, the distribution unit (4) housing a single distribution flap (24) for distributing the air flow (26) to the zones of the vehicle interior.

14. Assembly comprising a bulkhead (25) separating a vehicle interior from a forward compartment of a vehicle and a heating, ventilation and/or air-conditioning apparatus (1) according to any one of the preceding claims, secured against the bulkhead (25).
